# EUROPEAN PATENT APPLICATION

(11) **EP 4 571 956 A1**
(43) Date of publication of application: **18.06.2025**
(21) Application number: 23903963.9
(22) Date of filing: 12.12.2023
(51) Int. Cl.: H01M 50/107, B21D 51/26, B21D 51/46

(54) **ROTARY EQUIPMENT CALIBRATION DEVICE AND BATTERY MANUFACTURING SYSTEM INCLUDING SAME**

(30) Priority: 12.12.2022 KR 20220172498
(71) Applicant: LG Energy Solution, Ltd., Seoul 07335 (KR)
(72) Inventor: CHO, Hae-Youn, Daejeon 34122 (KR); KIM, Geon-Woo, Daejeon 34122 (KR); CHOI, Yong-Ho, Daejeon 34122 (KR)
(74) Representative: Goddar, Heinz J.
(86) International application number: PCT/KR2023/020442
(87) International publication number: WO 2024/128760

(57) **Abstract**

A rotary-equipment correction device, according to an embodiment of the present disclosure, for correcting rotary equipment including a plurality of forming heads and a support frame supporting the plurality of forming heads includes a first correction unit configured to move the support frame in a target direction and collectively correct the positions of the plurality of forming heads in the target direction; and a second correction unit configured to move at least one end of an abnormal forming head, which strays from a predetermined normal position in the target direction, among the plurality of forming heads, along the target direction and individually correct the position of the abnormal forming head in the target direction.

## Description

### TECHNICAL FIELD

The present application claims priority to Korean Patent Application No. 10-2022-0172498 filed on December 12, 2022 and Korean Patent Application No. 10-2023-0179673 filed on December 12, 2023 in the Republic of Korea, the disclosures of which are incorporated herein by reference.

The present disclosure relates to a rotary-equipment correction device and a battery manufacturing system including the same, and more specifically, it relates to a rotary-equipment correction device that automatically corrects the position of a forming head of a rotary equipment performing a battery-case forming process, and a battery manufacturing system including the same.

### BACKGROUND ART

In general, secondary batteries refer to batteries capable of being repeatedly charged and discharged, such as lithium-ion batteries, lithium-polymer batteries, nickel-cadmium batteries, nickel-hydrogen batteries, nickel-zinc batteries, and the like. A battery cell, which is the most fundamental secondary battery, may provide an output voltage of approximately 2.5V to 4.2V.

Recently, the secondary batteries have been applied to devices that require high output voltage and a large amount of charging capacity, such as electric vehicles or ESSs (Energy Storage Systems), and a battery module configured by connecting a plurality of battery cells in series, parallel, or a combination thereof and a battery pack configured by reconnecting these battery modules in series, parallel, or a combination thereof have been widely used.

As described above, the battery cells included in the battery module or battery pack may be manufactured in various forms and methods. For example, the battery cell may be manufactured by storing an electrode assembly in which positive and negative electrode plates are stacked with a separator therebetween and an electrolyte material in a cylindrical or prismatic battery can and sealing the battery can.

Rotary equipment used in manufacturing the battery can is a mechanical device that performs a forming process such as a can-cramping process or a can-sizing process using a plurality of forming heads that move sequentially along the outer circumferential surface of a rotary cam and descend at a predetermined position to press the battery can.

However, if errors occur in the dimensions of the manufactured battery can due to the wear of the mold of each forming head that comes into direct contact with the battery can in the existing rotary equipment, a skilled worker must inspect the rotary equipment and replace an abnormal forming head of the rotary equipment or manually adjust the position of an abnormal forming head, which requires a long time (approximately 8 hours) and cost to detect and correct errors in the rotary equipment and makes it difficult to perform in real time quality control of the battery cans manufactured by the rotary equipment.

### DISCLOSURE

### Technical Problem

The present disclosure has been designed to solve the problems of the related art, and therefore the present disclosure is directed to providing a rotary-equipment correction device capable of reducing the time and cost required for error detection and correction of the rotary equipment that performs a battery-can forming process, and a battery manufacturing system including the rotary-equipment correction device.

The present disclosure is also to provide a rotary-equipment correction device capable of performing quality control in real time for the battery cans manufactured by the rotary equipment, and a battery manufacturing system including the rotary-equipment correction device.

### Technical Solution

According to one aspect of the present disclosure, there is provided a rotary-equipment correction device for correcting rotary equipment including a plurality of forming heads configured to press objects while moving along a predetermined circular path and a support frame supporting the plurality of forming heads, the rotary-equipment correction device including: a first correction unit configured to move the support frame in a target direction and collectively correct the positions of the plurality of forming heads in the target direction; and a second correction unit configured to move at least one end of an abnormal forming head, which strays from a predetermined normal position in the target direction, among the plurality of forming heads, along the target direction and individually correct a position of the abnormal forming head in the target direction.

In an embodiment, the first correction unit may include: a correction cam in contact with the support frame; and a first driving unit configured to move the support frame in the target direction by changing the posture or position of the correction cam.

In an embodiment, the rotary equipment further includes a plurality of eccentric shafts in contact with the plurality of forming heads, respectively, and the second correction unit may be configured to rotate an eccentric shaft in contact with the abnormal forming head, among the plurality of eccentric shafts, at a predetermined rotation angle, thereby moving the at least one end of the abnormal forming head in the target direction.

In an embodiment, the second correction unit may include: a link member configured to be linked to the eccentric shaft; and a second driving unit configured to rotate the eccentric shaft by rotating the link member linked to the eccentric shaft.

In an embodiment, the rotary equipment may further include an adjustment bolt configured to adjust the rotation angle of the eccentric shaft, and the link member may be configured to be detachably connected to the adjustment bolt so as to be linked to the eccentric shaft.

In an embodiment, the rotary equipment may further include a fixing bolt configured to fix the eccentric shaft, and the second correction unit may be configured to loosen the fixing bolt before rotating the eccentric shaft and tighten the fixing bolt after rotating the eccentric shaft.

In an embodiment, the second correction unit may include a nut runner configured to loosen or tighten the fixing bolt.

In an embodiment, the rotary-equipment correction device may further include a transferring unit configured to support the second correction unit and transfer the second correction unit to a first position spaced apart from the rotary equipment or a second position adjacent to the rotary equipment.

In an embodiment, the transferring unit may be configured to transfer the second correction unit from the first position to the second position if there is an abnormal forming head among the plurality of forming heads and transfer the second correction unit back to the first position after the position of the abnormal forming head is corrected.

In an embodiment, the transferring unit may include: a guide rail extending from the first position to the second position; a support structure configured to support the second correction unit and be movable along the guide rail; and a third driving unit configured to move the support structure along the guide rail.

In an embodiment, the rotary-equipment correction device may further include: a position sensing unit configured to sense the position of each of the plurality of forming heads; and a controller configured to control the first correction unit to collectively correct the positions of the plurality of forming heads or control the second correction unit to individually correct the position of the abnormal forming head among the plurality of forming heads according to the position sensing result of the position sensing unit.

In an embodiment, the position sensing unit may include a displacement sensor configured to sense the distance between a forming head that reached a predetermined sensing position on the circular path, among the plurality of forming heads, and a predetermined reference position.

In an embodiment, the each of the plurality of forming heads may include: a spindle supported by the support frame; and a mold coupled to an end of the spindle and configured to press the object, and the displacement sensor may include a first displacement sensor configured to sense the distance between the mold of the forming head that reached the sensing position and a first reference position.

In an embodiment, the displacement sensor may further include a second displacement sensor configured to sense the distance between the spindle of the forming head that reached the sensing position and a second reference position.

A battery manufacturing system according to another aspect of the present disclosure may include the rotary-equipment correction device described above.

### Advantageous Effects

According to the present disclosure, the rotary-equipment correction device collectively corrects the positions of a plurality of forming heads provided in the rotary equipment or individually corrects the positions of abnormal forming heads among the plurality of forming heads, thereby reducing the time and cost required for error correction of the rotary equipment and enabling adaptive response to the defect trend of battery cases formed by the rotary equipment.

In addition, the rotary-equipment correction device detects the respective positions of the plurality of forming heads and collectively corrects the positions of the plurality of forming heads or individually corrects the positions of abnormal forming heads among the plurality of forming heads, thereby reducing the time and cost required for error detection of the rotary equipment and performing quality control in real time for the battery cases manufactured by the rotary equipment.

Furthermore, those skilled in the art to which the present disclosure pertains will clearly understand from the following description that various embodiments according to the present disclosure are also able to solve various technical problems not mentioned above.

### DESCRIPTION OF DRAWINGS

FIG. 1 is a diagram illustrating a rotary-equipment correction device according to an embodiment of the present disclosure.
FIG. 2 is a diagram illustrating an example of rotary equipment to which the present disclosure is applied.
FIG. 3 is a diagram illustrating a rotary-equipment correction device applied to rotary equipment.
FIG. 4 is a diagram illustrating a first correction unit of a rotary-equipment correction device according to an embodiment of the present disclosure.
FIG. 5 is a diagram illustrating the state in which a support frame of rotary equipment is moved by the first correction unit shown in FIG. 4.
FIG. 6 is a diagram illustrating a second correction unit of a rotary-equipment correction device according to an embodiment of the present disclosure.
FIG. 7 is a diagram illustrating the state in which the second correction unit shown in FIG. 6 is transferred to a forming head.
FIGS. 8 and 9 are diagrams illustrating a method of correcting the position of a forming head.
FIG. 10 is a flowchart illustrating a correction process of a rotary-equipment correction device according to an embodiment of the present disclosure.
FIG. 11 is a flowchart illustrating a process of correcting the position of each forming head of the rotary-equipment correction device according to an embodiment of the present disclosure.
FIG. 12 is a diagram illustrating a battery manufacturing system according to an embodiment of the present disclosure.

### BEST MODE

Hereinafter, embodiments according to the present disclosure will be described in detail with reference to the accompanying drawings to clarify solutions to the technical problems of the present disclosure. However, in describing the present disclosure, a description of related known technology, which may obscure the subject matter of the present disclosure, may be omitted. In addition, the terms used in this specification are defined in consideration of the functions in the present disclosure and may vary depending on the intention of the designer, manufacturer, etc. or custom thereof. Therefore, definitions of the terms described below should be made based on the description throughout this specification.

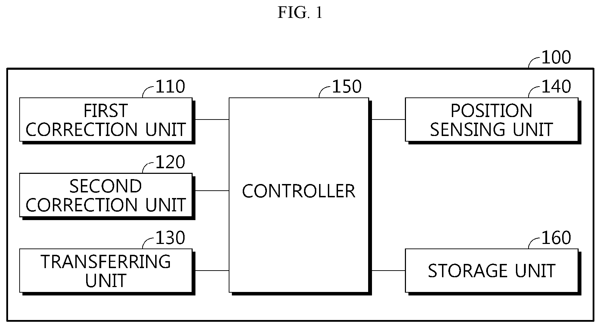

FIG. 1 is a diagram illustrating a rotary-equipment correction device 100 according to an embodiment of the present disclosure.

As shown in FIG. 1, the rotary-equipment correction device 100 according to the present disclosure is a device configured to correct rotary equipment including a plurality of forming heads and a support frame supporting the plurality of forming heads, and includes a first correction unit 110 and a second correction unit 120.

The first correction unit 110 is configured to move the support frame of the rotary equipment in a target direction and collectively correct the positions of the plurality of forming heads in the target direction.

To this end, the first correction unit 110 may include a correction cam in contact with the support frame and a first driving unit that changes the posture or position of the correction cam to move the support frame in the target direction.

The second correction unit 120 is configured to move at least one end of an abnormal forming head, which strays from a predetermined normal position in the target direction, among the plurality of forming heads, along the target direction and individually correct the position of the abnormal forming head in the target direction.

As will be described again below, the second correction unit 120 may be configured to rotate an eccentric shaft in contact with the abnormal forming head at a predetermined rotation angle, thereby moving at least one end of the abnormal forming head in the target direction.

In an embodiment, the rotary-equipment correction device 100 may further include a transferring unit 130. In this case, the transferring unit 130 may be configured to support the second correction unit 120 and transfer the second correction unit 120 to a first position spaced apart from the rotary equipment or a second position adjacent to the rotary equipment.

For example, the transferring unit 130 may be configured to transfer the second correction unit 120 from the first position to the second position if there is an abnormal forming head among the plurality of forming heads and, after the position of the abnormal forming head is corrected, transfer the second correction unit 120 back to the first position.

In an embodiment, the rotary-equipment correction device 100 may further include a position sensing unit 140 and a controller 150.

In this case, the position sensing unit 140 may be configured to sense the positions of the respective forming heads. To this end, the position sensing unit 140 may include a displacement sensor that senses the distance between a forming head that reached a predetermined sensing position on the circular path, among the plurality of forming heads, and a predetermined reference position.

Depending on the position sensing result of the position sensing unit 140, the controller 150 may control the first correction unit 110 to collectively correct the positions of the plurality of forming heads or control the second correction unit 120 to individually correct the position of the abnormal forming head among the plurality of forming heads.

This controller 150 may include a general-purpose processor or ASIC (Application-Specific Integrated Circuit) known in the art to execute various control logics performed in the present disclosure, and may further selectively include a chipset, a logic circuit, a register, a memory, a communication modem, or the like.

In an embodiment, the rotary-equipment correction device 100 may further include a storage unit 160. This storage unit 160 may store data or programs necessary for the operation of the controller 150 or data generated during the operation of the controller 150. The storage unit 160 may include one or more of various recording media such as RAM, ROM, EEPROM, flash memory, and registers.

A rotary-equipment correction device according to another embodiment of the present disclosure may include the above-described second correction unit 120, position sensing unit 140, and controller 150.

In this case, the position sensing unit 140 may be configured to sense the position of each of the plurality of forming heads.

In addition, the controller 150 may be configured to detect an abnormal forming head that strays from a predetermined normal position, from among the plurality of forming heads, based on the sensing result of the position sensing unit 140.

In addition, the second correction unit 120 may be configured to move at least one end of the detected abnormal forming head in a predetermined target direction to individually correct the position of the abnormal forming head in the target direction.

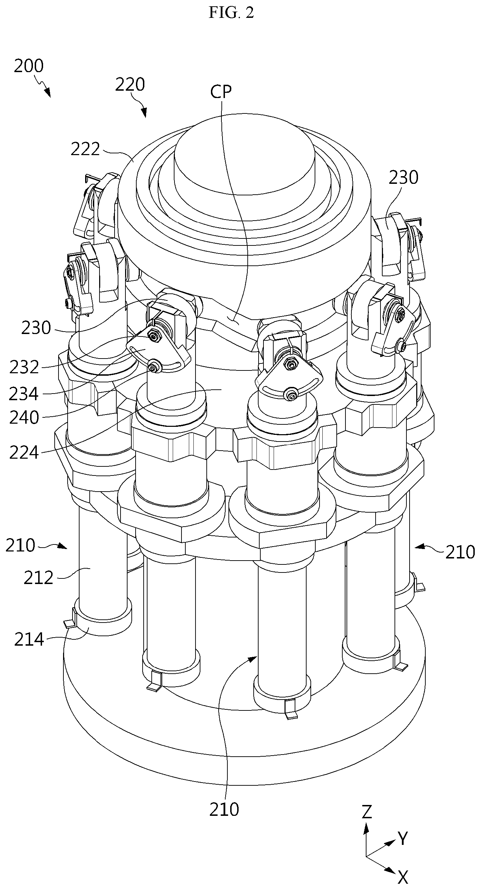

FIG. 2 is a diagram illustrating an example of rotary equipment 200 to which the present disclosure is applied.

As shown in FIG. 2, the rotary equipment 200 may include a plurality of forming heads 210 that moves sequentially in the horizontal direction along a predetermined circular path and further moves in the vertical direction to press forming objects (e.g., battery cases), and a support frame 220 supporting the plurality of forming heads 210.

Each forming head 210 may include a spindle 212 supported by the support frame 220, and a mold 214 coupled to the end of the spindle 212 so as to press the object.

The support frame 220 may include a first support frame 222 that provides a circular path along which the forming heads 210 move and a second support frame 224 that rotates along with the rotation axis of the rotary equipment 200 to move the forming heads.

In addition, the rotary equipment 200 may further include a plurality of eccentric shafts 230 respectively corresponding to the plurality of forming heads 210. Each eccentric shaft 230 may be configured to come into contact with a corresponding forming head 210 such that the position of at least one end of the corresponding forming head 210 changes depending on the rotation angle of the corresponding eccentric shaft 230.

For example, the eccentric shaft 230 may be configured to rotate around an eccentric axis extending in a direction perpendicular to the target direction (e.g., the vertical direction or the ±Z-axis direction), and the spindle 212 of the forming head 210 in contact with the outer circumferential surface of the eccentric shaft 230 may move in the target direction as the eccentric shaft 230 rotates.

In addition, the rotary equipment 200 may further include an adjustment bolt 232 for adjusting the rotation angle of the eccentric shaft 230. In this case, the eccentric shaft 230 may be configured to rotate together with the adjustment bolt 232 when the adjustment bolt 232 is rotated.

In addition, the rotary equipment 200 may further include a fixing bolt 240 for fixing the eccentric shaft 230. For example, the eccentric shaft 230 may have a flange 234, and the fixing bolt 240 may be configured to pass through the flange 234 of the eccentric shaft 230 and to be fastened to the corresponding forming head 210, thereby fixing the eccentric shaft 230. In another embodiment, the fixing bolt 240 may be configured to directly pass through the body of the eccentric shaft 230 and to be fastened to the corresponding forming head 210, thereby fixing the eccentric shaft 230.

This rotary equipment 200 may be applied to a battery manufacturing system. For example, in the case where the rotary equipment 200 is applied to a battery manufacturing system for manufacturing cylindrical batteries or prismatic batteries using can-shaped cases, the rotary equipment 200 may perform a forming process of the battery case, such as a can-cramping process or a can-sizing process

In this case, the respective forming heads 210 of the rotary equipment 200 move along a circular path CP provided in the form of a groove on the first support frame 222 and descend a predetermined distance in a predetermined section to press the battery case. After pressing the battery case, the forming head 210 ascends back to its original height and repeatedly moves along the corresponding circular path CP.

Meanwhile, in such rotary equipment, if an error occurs in the position of the forming head due to various factors such as wear, impact, or vibration of the forming head, a problem occurs in which the sizes or shapes of the manufactured battery cases are not uniform.

Therefore, the rotary-equipment correction device 100 according to the present disclosure, when an error occurs in the positions of a plurality of forming heads provided in the rotary equipment, may automatically correct the error, thereby ensure uniformity of battery quality and reducing the time and cost required for error correction of the rotary equipment.

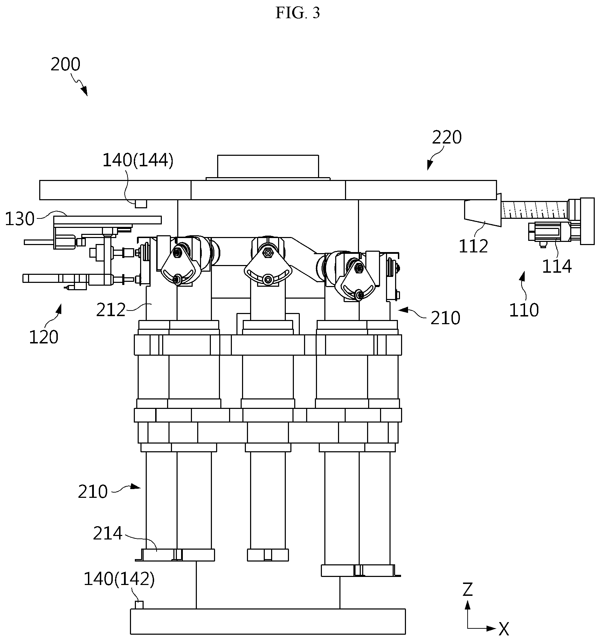

FIG. 3 is a diagram illustrating a rotary-equipment correction device 100 applied to rotary equipment 200.

As shown in FIG. 3, the rotary-equipment correction device 100 according to the present disclosure is a device configured to correct rotary equipment 200 including a plurality of forming heads 210 and a support frame 220 supporting the plurality of forming heads 210, and includes a first correction unit 110 and a second correction unit 120.

The first correction unit 110 is configured to move the support frame 220 of the rotary equipment 200 in a target direction (the vertical direction or the ±Z-axis direction) and collectively correct the positions of the plurality of forming heads 210 in the target direction.

To this end, the first correction unit 110 may include a correction cam 112 in contact with the support frame 220 and a first driving unit 114 that changes the posture or position of the correction cam 112 to move the support frame 220 in the target direction.

The first driving unit 114 may be configured in various ways depending on the type of correction cam 112. For example, if the correction cam 112 converts linear motion in one direction to linear motion in another direction, the first driving unit 114 may be configured to move the correction cam 112 in a straight line. On the other hand, if the correction cam 112 converts rotational motion into linear motion, the first driving unit 114 may be configured to rotate the corresponding correction cam 112. To this end, the first driving unit 114 may include a servo motor.

The second correction unit 120 is configured to move at least one end of an abnormal forming head, which strays from a predetermined normal position in the target direction, among the plurality of forming heads 210, along the target direction, thereby individually correcting the position of the abnormal forming head in the target direction.

As described above, the second correction unit 120 may be configured to rotate an eccentric shaft in contact with the abnormal forming head at a predetermined rotation angle about its eccentric axis, thereby moving at least one end of the abnormal forming head in the target direction.

In an embodiment, the rotary-equipment correction device 100 may further include a position sensing unit 140.

In this case, the position sensing unit 140 may be configured to sense the respective positions of the plurality of forming heads 210. To this end, the position sensing unit 140 may include a displacement sensor that senses the distance between a forming head that reached a predetermined sensing position on the circular path, among the plurality of forming heads 210, and a predetermined reference position.

For example, the displacement sensor may include a first displacement sensor 142 that senses the distance between the mold 214 of the forming head that reached the sensing position and a first reference position. In addition, the displacement sensor may further include a second displacement sensor 144 that senses the distance between the spindle 212 of the forming head that reached the sensing position and a second reference position.

In an embodiment, the controller (150 in FIG. 1) of the rotary-equipment correction device 100, depending on the position sensing result of the position sensing unit 140, controls the first correction unit 110 to collectively correct the positions of the plurality of forming heads or controls the second correction unit 120 to individually correct the position of the abnormal forming head among the plurality of forming heads.

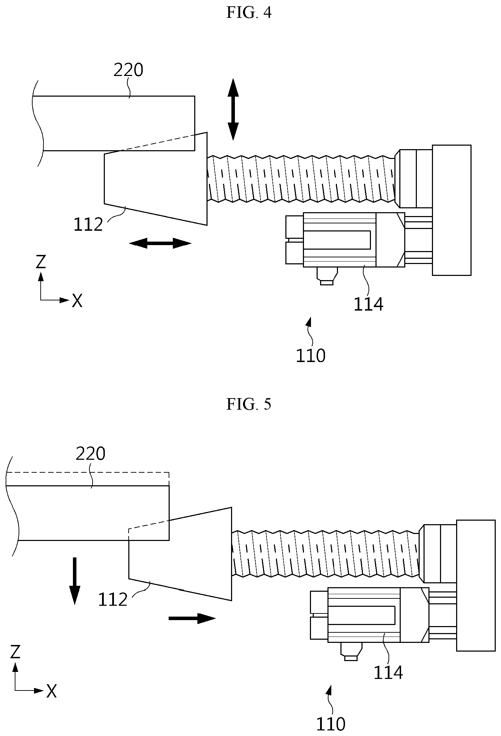

FIG. 4 is a diagram illustrating a first correction unit 110 of a rotary-equipment correction device according to an embodiment of the present disclosure.

As shown in FIG. 4, the first correction unit 110 may move the support frame 220 of the rotary equipment 200 in the target direction (vertical direction or ±Z-axis direction) to collectively correct the positions of a plurality of forming heads 210 in the target direction.

For example, the first driving unit 114 may move the correction cam 112 in a direction (the horizontal direction or the ±X-axis direction) perpendicular to the target direction to move the support frame 220 of the rotary equipment 200 in the target direction.

FIG. 5 is a diagram illustrating the state in which the support frame 220 of the rotary equipment is moved by the first correction unit 110 shown in FIG. 4.

As shown in FIG. 5, the first driving unit 114 of the first correction unit 110 may move the correction cam 112 in the +X-axis direction, thereby moving the support frame 220 of the rotary equipment in the -Z-axis direction.

On the other hand, if the correction cam 112 is moved in the -X-axis direction, the support frame 220 of the rotary equipment may be moved in the +Z-axis direction.

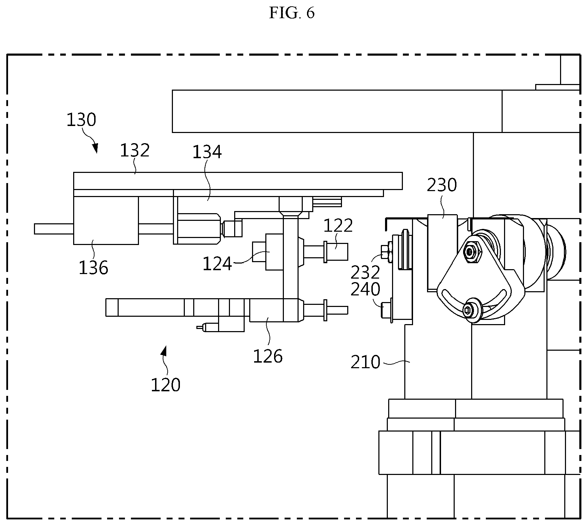

FIG. 6 is a diagram illustrating a second correction unit 120 of a rotary-equipment correction device according to an embodiment of the present disclosure.

As shown in FIG. 6, the second correction unit 120 may move at least one end of an abnormal forming head 210, which strays from a predetermined normal position in the target direction, among the plurality of forming heads 210, along the target direction (vertical direction or ±Z-axis direction), thereby individually correcting the position of the abnormal forming head in the target direction.

For example, the second correction unit 120 may rotate the eccentric shaft 230 in contact with the abnormal forming head 210 by a predetermined rotation angle around its eccentric axis, thereby moving at least the lower end of the abnormal forming head 210 in the target direction.

To this end, the second correction unit 120 may include a link member 122 capable of being linked to the eccentric shaft 230, and a second driving unit 124 configured to rotate the link member 122 linked to the eccentric shaft 230, thereby rotating the eccentric shaft 230 as described above.

In this case, the link member 122 may be detachably connected to an adjustment bolt 232 that adjusts the eccentric shaft 230 so as to be linked to the eccentric shaft 230. In addition, the second driving unit 124 may include a servo motor.

In an embodiment, the second correction unit 120 may be configured such that the fixing bolt 240 that fixed the eccentric shaft 230 is loosened before rotating the eccentric shaft 230 as described above, and then the fixing bolt 240 is re-tightened after rotating the eccentric shaft 230 by a predetermined rotation angle around the eccentric axis. To this end, the second correction unit 120 may include a nut runner 126 configured to loosen or tighten the fixing bolt 240.

Meanwhile, the rotary-equipment correction device 100 according to an embodiment of the present disclosure may further include a transferring unit 130. The transferring unit 130 may be configured to support the second correction unit 120 and transfer the second correction unit 120 to a first position spaced apart from the rotary equipment or a second position adjacent to the rotary equipment.

For example, the transferring unit 130 may be configured to transfer the second correction unit 120 from the first position to the second position if there is an abnormal forming head 210 among the plurality of forming heads and, after the position of the abnormal forming head 210 is corrected, transfer the second correction unit 120 back to the first position.

To this end, the transferring unit 130 may include a guide rail 132 extending from the first position to the second position, a support structure 134 configured to support the second correction unit 120 and be movable along the guide rail 132, and a third driving unit 136 that moves the support structure 134 along the guide rail 132. The third driving unit 136 may include a hydraulic cylinder.

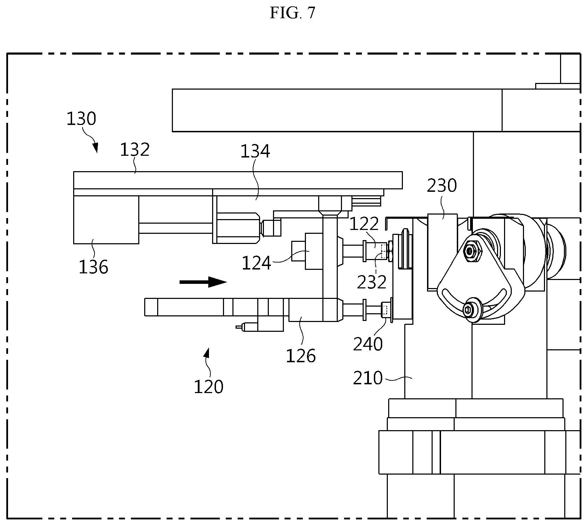

FIG. 7 is a diagram illustrating the state in which the second correction unit 120 shown in FIG. 6 is transferred to a forming head.

As shown in FIG. 7, if an abnormal forming head 210 is sensed by the above-described position sensing unit 140, the transferring unit 130 may transfer the second correction unit 120 from a first position spaced apart from the rotary equipment to a second position adjacent to the rotary equipment.

As a result, the link member 122 of the second correction unit 120 may be connected to the adjustment bolt 232 of the rotary equipment, and the nut runner 126 of the second correction unit 120 may be connected to the fixing bolt 240 of the rotary equipment.

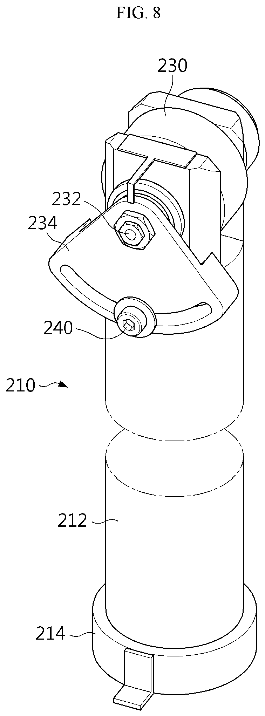

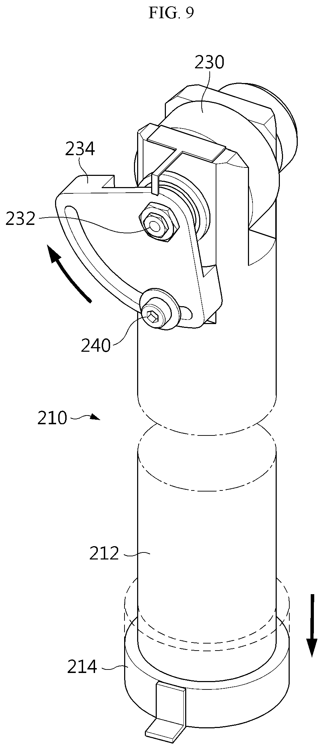

FIGS. 8 and 9 are diagrams illustrating a method of correcting the position of a forming head.

First, as shown in FIG. 8, if the link member 122 of the second correction unit 120 is connected to the adjustment bolt 232 of the rotary equipment, and if the nut runner 126 of the second correction unit 120 is connected to the fixing bolt 240 of the rotary equipment, the nut runner 126 loosens the fixing bolt 240 before the second driving unit 124 of the second correction unit 120 rotates the link member 122.

Next, as shown in FIG. 9, the second driving unit 124 of the second correction unit 120 may rotate the link member 122 connected to the adjustment bolt 232, thereby rotating the eccentric shaft 230 by a predetermined angle. As the eccentric shaft 230 rotates, the spindle 212 of the abnormal forming head 210 may move in the target direction, and as a result, the position of the mold 214 coupled to the end of the spindle 212 may be corrected.

As described above, when the position correction for the abnormal forming head 210 is completed, the nut runner 126 tightens the fixing bolt 240 to fix the eccentric shaft 230.

Then, the transferring unit 130 transfers the second correction unit 120 back to the first position to separate the same from the rotary equipment.

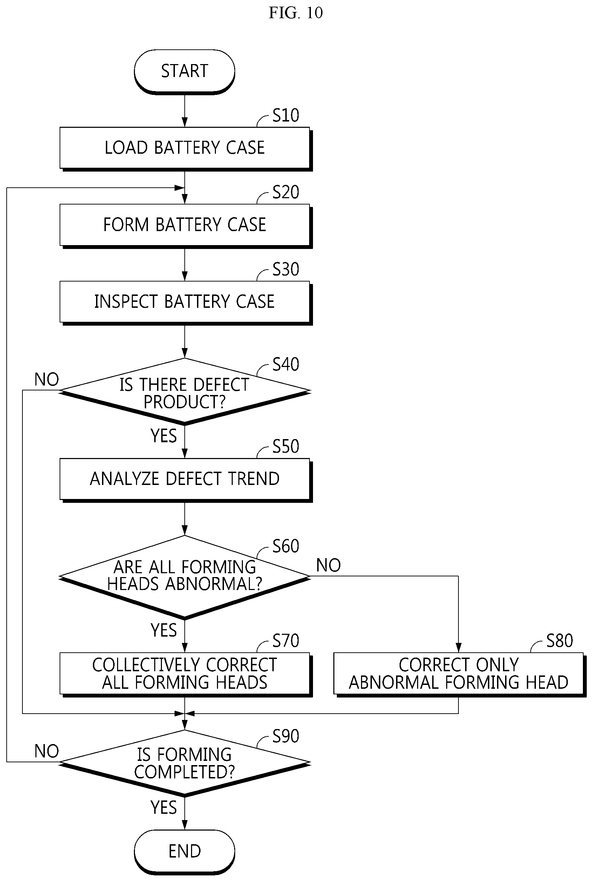

FIG. 10 is a flowchart illustrating a correction process of a rotary-equipment correction device according to an embodiment of the present disclosure.

First, as shown in FIG. 10, battery cases are sequentially loaded to the rotary equipment 200 (S10). Then, the respective forming heads 210 of the rotary equipment 200 perform a forming process on the battery cases by pressing the battery cases using a mold (S20).

Next, the controller 150 of the rotary-equipment correction device 100 collects position data on each forming head sensed through the position sensing unit 140, dimension data of the battery cases measured through separate inspection equipment, or the like, and inspects the manufactured battery cases (S30).

The controller 150 may determine whether or not the battery cans manufactured by the rotary equipment are defective based on the inspection result (S40).

If there is a defective product, the controller 150 may analyze the defect trend and operate either one of the first correction unit 110 and the second correction unit 120 described above depending on the analysis result or sequentially operate both of them (S50).

For example, if all battery cases formed by the forming heads of the rotary equipment 200 have a consistent error as a result of analyzing the defect trend, the controller 150 may determine that all forming heads of the rotary equipment 200 are abnormal (S60).

As a result, the controller 150 may control the first correction unit 110 to perform collective position correction on all the forming heads of the rotary equipment 200 (S70).

On the other hand, if only a battery case formed by a specific forming head 210 among all the forming heads of the rotary equipment 200 has an error, the controller 150 may control the second correction unit 120 to perform position correction only on the corresponding forming head 210 that causes the occurrence of error (S80).

The rotary-equipment correction device 100 may repeat the above-described processes until the forming process of the rotary equipment 200 is completed (S90).

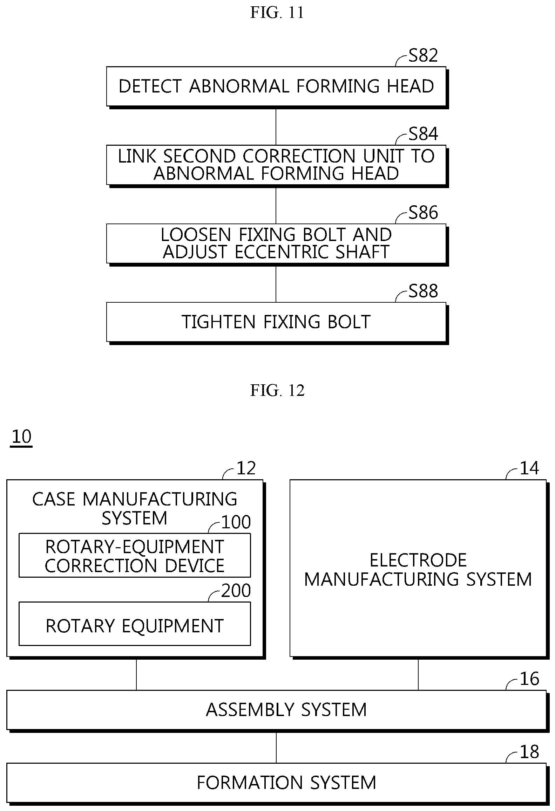

FIG. 11 is a flowchart illustrating a process of correcting the position of each forming head of the rotary-equipment correction device according to an embodiment of the present disclosure.

As shown in FIG. 11, if only a battery case formed by a specific forming head 210 among all the forming heads of the rotary equipment 200 has an error, the controller 150 may sense the position of the corresponding forming head through the position sensing unit 140 and detect the corresponding forming head as an abnormal forming head (S82).

Next, the controller 150 may control the second correction unit 120 and the transferring unit 130 to perform position correction on the abnormal forming head.

That is, the transferring unit 130 transfers the second correction unit 120 from a first position spaced apart from the rotary equipment 200 to a second position adjacent to the rotary equipment 200, thereby linking the second correction unit 120 to the abnormal forming head 210 (S84). In this case, the link member 122 of the second correction unit 120 may be connected to the adjustment bolt 232 of the rotary equipment 200, and the nut runner 126 of the second correction unit 120 may be connected to the fixing bolt 240 of the rotary equipment 200.

Next, the nut runner 126 of the second correction unit 120 loosens the fixing bolt 240, and the second driving unit 124 of the second correction unit 120 rotates the link member 122 connected to the adjustment bolt 232, thereby adjusting the rotation angle of the eccentric shaft 230 (S86). As the eccentric shaft 230 rotates, the spindle 212 of the abnormal forming head 210 may move in the target direction, and as a result, the position of the mold 214 coupled to the end of the spindle 212 may be corrected.

As described above, when the position correction for the abnormal forming head 210 is completed, the nut runner 126 tightens the fixing bolt 240 to fix the eccentric shaft 230 again (S88). In addition, the transferring unit 130 transfers the second correction unit 120 back to the first position to be separated from the rotary equipment.

FIG. 12 shows a battery manufacturing system 10 according to an embodiment of the present disclosure.

As shown in FIG. 12, the battery manufacturing system 10 according to an embodiment of the present disclosure includes the rotary-equipment correction device 100 described above.

That is, the battery manufacturing system 10 may include a case manufacturing system 12 including the rotary-equipment correction device 100 according to the present disclosure, an electrode manufacturing system 14, an assembly system 16, and a formation system 18.

The case manufacturing system 12 may be configured to manufacture a battery case using the rotary equipment 200. As described above, the rotary-equipment correction device 100 according to the present disclosure may monitor in real time and correct the positions of forming heads of the rotary equipment 200.

The electrode manufacturing system 14 may be configured to manufacture an electrode assembly by stacking a positive electrode plate and a negative electrode plate on each other with a separator interposed therebetween.

The assembly system 16 may be configured to store the electrode assembly manufactured by the electrode manufacturing system 14 and an electrolyte material in the battery case manufactured by the case manufacturing system 12, and seal the battery case.

The formation system 18 may be configured to activate the assembled battery by performing charging, discharging, aging, or the like of the assembled battery.

As described above, according to the present disclosure, the rotary-equipment correction device may correct the positions of a plurality of forming heads provided in the rotary equipment collectively or individually correct the positions of abnormal forming heads among the plurality of forming heads, thereby reducing the time and cost required for error correction of the rotary equipment and enabling adaptive response to the defect trend of battery cases formed by the rotary equipment.

In addition, the rotary-equipment correction device may detect the respective positions of the plurality of forming heads and correct the positions of the plurality of forming heads collectively or individually correct the positions of abnormal forming heads among the plurality of forming heads, thereby reducing the time and cost required for error detection of the rotary equipment and performing quality control in real time for the battery cases manufactured by the rotary equipment.

Furthermore, the embodiments according to the present disclosure are also able to solve various technical problems other than those mentioned in this specification in the related technical fields, as well as the relevant technical field.

So far, the present disclosure has been described with reference to specific embodiments. However, those skilled in the art will clearly understand that various modified embodiments may be implemented within the technical scope of the present disclosure. Therefore, the previously disclosed embodiments should be considered as those intended to describe the present disclosure, instead of those intended to limit the present disclosure. In other words, the true scope of the technical idea of the present disclosure is shown in the claims, and all differences within the scope equivalent thereto should be construed as being included in the present disclosure.

## Claims

1. A rotary-equipment correction device for correcting rotary equipment comprising a plurality of forming heads configured to press objects while moving along a predetermined circular path and a support frame supporting the plurality of forming heads, the rotary-equipment correction device comprising:
a first correction unit configured to move the support frame in a target direction and collectively correct the positions of the plurality of forming heads in the target direction; and
a second correction unit configured to move at least one end of an abnormal forming head, which strays from a predetermined normal position in the target direction, among the plurality of forming heads, along the target direction and individually correct a position of the abnormal forming head in the target direction.

2. The rotary-equipment correction device according to claim 1,
wherein the first correction unit comprises:
a correction cam configured to be in contact with the support frame; and
a first driving unit configured to move the support frame in the target direction by changing the posture or position of the correction cam.

3. The rotary-equipment correction device according to claim 1,
wherein the rotary equipment further comprises a plurality of eccentric shafts in contact with the plurality of forming heads, respectively, and
wherein the second correction unit is configured to rotate an eccentric shaft in contact with the abnormal forming head, among the plurality of eccentric shafts, at a predetermined rotation angle, thereby moving the at least one end of the abnormal forming head in the target direction.

4. The rotary-equipment correction device according to claim 3,
wherein the second correction unit comprises:
a link member configured to be linked to the eccentric shaft; and
a second driving unit configured to rotate the eccentric shaft by rotating the link member linked to the eccentric shaft.

5. The rotary-equipment correction device according to claim 4,
wherein the rotary equipment further comprises an adjustment bolt configured to adjust the rotation angle of the eccentric shaft, and
wherein the link member is configured to be detachably connected to the adjustment bolt so as to be linked to the eccentric shaft.

6. The rotary-equipment correction device according to claim 3,
wherein the rotary equipment further comprises a fixing bolt configured to fix the eccentric shaft, and
wherein the second correction unit is configured to loosen the fixing bolt before rotating the eccentric shaft and tighten the fixing bolt after rotating the eccentric shaft.

7. The rotary-equipment correction device according to claim 6,
wherein the second correction unit comprises
a nut runner configured to loosen or tighten the fixing bolt.

8. The rotary-equipment correction device according to claim 1,
further comprising a transferring unit configured to support the second correction unit and transfer the second correction unit to a first position spaced apart from the rotary equipment or a second position adjacent to the rotary equipment.

9. The rotary-equipment correction device according to claim 8,
wherein the transferring unit is configured to transfer the second correction unit from the first position to the second position if there is the abnormal forming head among the plurality of forming heads and transfer the second correction unit back to the first position after the position of the abnormal forming head is corrected.

10. The rotary-equipment correction device according to claim 8,
wherein the transferring unit comprises:
a guide rail extending from the first position to the second position;
a support structure configured to support the second correction unit and be movable along the guide rail; and
a third driving unit configured to move the support structure along the guide rail.

11. The rotary-equipment correction device according to claim 1, further comprising:
a position sensing unit configured to sense the position of each of the plurality of forming heads; and
a controller configured to control the first correction unit to collectively correct the positions of the plurality of forming heads or control the second correction unit to individually correct the position of the abnormal forming head among the plurality of forming heads according to the position sensing result of the position sensing unit.

12. The rotary-equipment correction device according to claim 11,
wherein the position sensing unit comprises a displacement sensor configured to sense the distance between a forming head that reached a predetermined sensing position on the circular path, among the plurality of forming heads, and a predetermined reference position.

13. The rotary-equipment correction device according to claim 12,
wherein the each of the plurality of forming heads comprises:
a spindle supported by the support frame; and
a mold coupled to an end of the spindle and configured to press the object, and
wherein the displacement sensor comprises
a first displacement sensor configured to sense the distance between the mold of the forming head that reached the sensing position and a first reference position.

14. The rotary-equipment correction device according to claim 13,
wherein the displacement sensor further comprises
a second displacement sensor configured to sense the distance between the spindle of the forming head that reached the sensing position and a second reference position.

15. A battery manufacturing system comprising the rotary-equipment correction device according to any one of claims 1 to 14.
